# EUROPEAN PATENT APPLICATION

(11) **EP 4 831 458 A1**
(43) Date of publication of application: **28.10.2026**
(21) Application number: 26173615.1
(22) Date of filing: 21.04.2026
(51) Int. Cl.: F01N 3/10, F01N 13/08, F01N 13/18, F01N 3/20

(54) **TRUCK WITH AN IMPROVED EAS SUSPENSION**

(30) Priority: 22.04.2025 NL 2040227
(71) Applicant: DAF Trucks N.V., 5643 TW Eindhoven (NL)
(72) Inventor: VAN DER KNAAP, Albertus Clemens Maria, 5643 TW Eindhoven (NL); PIROS, Zoltán, 5643 TW Eindhoven (NL); WEIJENBORG, Bernardus Johannes Maria, 5643 TW Eindhoven (NL); SEGERS, Frank Henri, 5643 TW Eindhoven (NL)
(74) Representative: V.O.

(57) **Abstract**

Disclosed is a truck with a frame with at least one strut that extends upward from the chassis directly behind a cabin of the truck, wherein an EAS unit of the truck is suspended upright to the at least one strut. The first axial end of the EAS unit is connected to the at least one strut by a first mount, and the second axial end of the EAS unit is mounted to the at least one strut by a second mount that is formed by a flex plate assembly that includes at least one flex plate. The flex plate has an out-of-plane flexibility and an in-plane rigidity, to suspend the EAS unit in a non-overconstrained fashion.

## Description

The invention relates to a truck, comprising a chassis that includes a pair of longitudinal chassis members that extend between a front axle and a rear axle of the truck, and a frame arranged for suspending an EAS unit in a substantially upright orientation behind a cabin of the truck.

In Fuel Cell Electric Vehicles (FCEV), the fuel cell unit that generates electric power which is fed to an electro-mechanic motor that drives the wheels may be supplied with a fuel, such as hydrogen, which is stored in pressurized fuel tanks mounted on board of the vehicle. Alternatively, in Hydrogen Internal Combustion Engine vehicles (H₂-ICE) the hydrogen fuel is burnt in the combustion chambers with pistons that move up and down, directly driving the wheels via the engine's central output shaft. The same Hydrogen Storage System (HSS) comprising pressurized fuel tanks mounted on board of the vehicle may advantageously be applied in these H₂-ICE applications with the objective to have one generic hydrogen storage vehicle implementation solution and consequently saving on overall system costs, e.g. cost savings related to development of hydrogen tank and frame system components and part price reductions related to large volume piece numbers. Such pressurized fuel tanks may for example be mounted on a lateral side of the chassis, and/or between the cabin and the trailer extending mainly above but indirectly attached to the chassis via a separate frame structure, also referred to as "cabin backpack".

Although hydrogen powered vehicles are CO₂ neutral by definition H₂-ICE vehicles may still need an Exhaust Aftertreatment System (EAS) to comply to latest stringent air pollution emission requirements, particularly NOx, as set by EURO7 legislation. Placing a conventional box shaped EAS unit at the well-known position at a side of the chassis, directly behind the front wheels, limits the available packaging space for application of a large sized hydrogen vessel at the side of the chassis and thus poses a restraint in maximizing the size of the hydrogen storage system and thus achievable driving range. Placing an EAS unit at one side of the chassis will result in application of a shorter tank between the front and rear wheels, causing a penalty in hydrogen storage content. Given the available packaging space envelope for placement of hydrogen vessels on a typical tractor, the target hydrogen storage volume as needed for a so-called once-a-day refueling concept, typically > 800 km driving range for long haulage trucks, may consequently not be achieved.

Summarizing above, application of two identical big size hydrogen vessels left and right of the chassis, using the total available distance between front and rear wheels, may be considered ideal in terms of maximizing storage content as well as cost optimization, due to identical parts on the left and right hand side of the truck. Moreover, by applying the same storage system for both FCEV and H₂-ICE further cost reductions can be achieved via increased sales of identical (shared) system parts, e.g. for economy of scale.

In case of H₂-ICE powered trucks placement of an EAS unit directly behind the cabin of the truck, in the middle of the so-called "cabin backpack" in between two upstanding pressurized hydrogen fuel tanks would be ideal as this is a free design space for a vehicle equipped with a H₂-ICE powertrain. Note that in case of a FCEV this packaging space in the middle of the "cabin backpack" is typically reserved for placement of remote cooling radiators as needed for cooling of the fuel cell modules when operated at full power. The arrangement of implementing an EAS unit in the middle of the cabin backpack however creates new challenges to be resolved. Particularly the trailer perimeter confined packaging space requires a different form factor than the conventional box shaped modules at the side of the chassis. Furthermore, exhaust aftertreatment systems as needed for application of Internal Combustion Engines, either Diesel or Hydrogen powered, to fulfill stringent NO_{X} and CO₂ air pollution targets are submitted to extreme temperature variations, e.g. between -40° C and +450° C, during normal use. This results in thermal expansion and contraction of the EAS unit, e.g. in a range between 5 and 10 mm, with respect to the relatively colder chassis parts to which the EAS unit is mounted. This, in turn, causes internal stresses in the EAS unit and/or its suspension arrangement, which may reduce the reliability and lifespan of the EAS. Depending on the packaging of the EAS unit and its position in the vehicle, it may therefore be a challenge to robustly suspend the EAS unit, preferably in a non-overconstrained manner.

As background art, known arrangements for suspending an EAS unit are described in US6095460, US5649685, US7478700, US5428957, EP3406876, US2010/314504, US4907666, and US3466093.

### SUMMARY

It is an object of the present invention to provide an improved suspension arrangement for an EAS unit on board of a truck, in particular a H₂-ICE truck. Therefore, aspects of the invention relate to a truck as defined in the appended claims.

The truck comprises a chassis that includes a pair of longitudinal chassis members that extend between a front axle and a rear axle of the truck, and a frame that comprises at least one strut that extends upward from the chassis behind a cabin of the truck, wherein an elongate exhaust aftertreatment system (EAS) unit is suspended in an upright position to the at least one strut.

A first axial end of the EAS unit is connected to the at least one struts by a first mount. In this context it is noted that the first axial end may also be indirectly connected to the at least one strut by a first mount via an interconnecting bracket system assembly or even to a pair of struts, e.g. via an interconnecting table or plate between base members of the struts that are supported by the pair of two parallel chassis members. The first mount is arranged for constraining translations and allowing one or more rotations of the first axial end of the EAS unit with respect to the at least one strut. Preferably, when the EAS unit is mounted, the first mount constrains all translations, i.e. in any direction, and allows limited out-of-plane tilting movement, e.g. a pitch and/or roll rotation, of the first axial end with respect to the at least one strut, as seen in the truck's reference frame.

A second axial end of the EAS unit is movably mounted to at least one of the struts by a second mount that is formed by a flex plate assembly. The flex plate assembly comprises a strut connector that is connected to the at least one strut and an EAS connector that is connected to the second axial end of the EAS unit. The EAS connector is movably coupled to the strut connector by at least one flex plate. The EAS connector may provide one or more connection points between the at least one flex plate and the EAS unit. Similarly, the strut connector may provide one or more connection points between the at least one flex plate and the strut. In case of multiple EAS and/or strut connection points, a distance between the connection points at the EAS unit and/or at the strut can be set to constrain a rotation of the EAS unit about its axial centerline. For example, a larger distance between the connection points provides a higher resistance against said axial rotation of the EAS unit.

The at least one flex plate has a flexibility, e.g. a relatively low bending stiffness, in an out-of-plane direction for allowing an out-of-plane translation and tilting rotation of the EAS connector with respect to the strut connector, and a rigidity, e.g. a relatively high stiffness, in at least two in-plane directions for constraining in-plane translations of the EAS connector with respect to the strut connector. Preferably, the at least one flex plate has a higher stiffness in the at least two in-plane directions than in the out-of-plane direction, preferably by at least a factor 50, more preferably by at least a factor 100, e.g. by a factor of 100-500, or even larger.

The rotation about an axial direction of the EAS unit may advantageously be constrained by the combination of the first and second mounts. For those designs wherein the first mount restraints the yaw rotation of the upstanding EAS unit the fixation of the second axial end of the EAS unit can be realized by a second mount having only one connection point with the EAS connector. However, to prevent harmful torsional loads on the vulnerable EAS unit relating the acceleration forces that act in the center of gravity of the upstanding EAS unit, the flex plate based fixation system of the second axial end may be designed such that the in-plane yaw motion is counteracted either by application of one flex plate assembly having two connection points with the EAS connector or a combination of two opposing flex plate assemblies, each having only one connection point with the EAS connector.

Accordingly, an EAS suspension arrangement is provided with an improved thermal expansion absorbance/robustness of the fixation system, whilst not compromising the stiffness as needed for good vibration isolation in a flexible truck chassis. The present invention realizes a non-overconstrained fixation arrangement to absorb thermal expansion, mainly in axial direction of the EAS unit, whilst tightly connecting the unit, which has a typical mass of 100 - 200 kg, to the chassis for the purpose of tuning high eigenfrequencies to avoid dangerous resonance modes. Particularly the application of a long base, e.g. multi-layer, flex plate that is mounted off-sided to an upstanding strut may contribute to this major robustness improvement: the longer the bending length, the lower the material stress and parasitic forces in the connective joints.

The at least one flex plate, which is preferably substantially horizontally oriented, provides flexibility by permitting out-of-plane translation, particularly along the EAS unit's axial direction, as well as allowing tilting movements around at least two axes perpendicular to the axial direction. However, the stiffness of the at least one flex plate restricts movement in at least two in-plane directions relative to the strut, thereby ensuring stability. Additionally, the flex plate may also limit rotational movement around the axial direction of the EAS unit.

On the opposite side of the EAS unit, the first mount is designed to restrict translational movement, ensuring that the first axial end of the EAS cannot move in any direction, essentially providing rigidity along three orthogonal translation axes. In contrast, the first axial end is allowed to rotate more freely, either due to the compliance features of the first mount bracket assembly or through the use of specific rotational components. In preferred embodiments, the first mount includes a central base plate to carry the vertical load of the EAS unit, combined with a 3-point strap fixation at the first axial end having one rigid reference fixation point and being enhanced with two Z-shaped brackets to allow for vertical and radial compliance. However, other components may be used at the first mount, such as a ball joint or cardanic coupling, elastomeric bushings, or a combination of these.

As a result, the suspension system supports the elongate EAS unit only at its axial ends in a way that avoids over-constraining the structure. This design ensures that the degrees of freedom of the EAS unit are fully constrained in a statically determinate, or isostatic, manner. This is achieved by combining a flex plate assembly at the second mount with a complementary first mount, which may include a three-point fixation in combination with Z-shaped brackets as explained further on in the present disclosure. The flex plate based fixation system of the second axial end acts as a suspension element or system that absorbs relative movements between the axial ends, thereby protecting the EAS unit and chassis/frame components from excessive loads or stress peaks. Specifically, it allows axial displacement and tilting of the EAS connector relative to the strut connector, accommodating rotations in two orthogonal cardanic degrees of freedom.

Traditional EAS suspension arrangements often suffer from being over-constrained, meaning they may develop internal stress without external load due to mechanical or thermal factors. An over-constrained structure, characterized by more mechanical constraints than necessary, can accumulate stress, especially when dynamic forces are applied, leading to durability issues over time.

To overcome this problem, the present invention offers a statically determinate structure that reduces self-stress within both the suspension system and the EAS unit itself. This is accomplished by using at least one flex plate to suspend the second axial end in combination with a first mount for the first axial end, creating a balanced, stress-minimized configuration.

This suspension arrangement reduces internal stresses caused by pressure or temperature variations that result in axial expansion or contraction of the EAS unit. It also accommodates movements of the EAS unit with respect to the chassis, which might otherwise induce stress in conventional rigid systems, especially during dynamic vehicle operations. By allowing for controlled flexibility, the system protects the EAS unit and the chassis from force overloads and localized stress.

Additionally, the statically determinate structure simplifies assembly, as its compliant nature allows for the connection of parts with minor dimensional deviations due to manufacturing tolerances, without causing internal stress or requiring adjustments.

Moreover, the compact and space-efficient design of the EAS unit suspension allows for optimal use of available space in the truck architecture, maximizing fuel storage capacity while minimizing vehicle weight. This contributes to an efficient and lightweight integration of the suspension system within the truck's overall structure. For example, in some embodiments the frame is arranged for suspending one or more elongate pressure vessels in a substantially upright orientation behind the cabin of the truck, and the at least one strut is part of a pair of struts that extend upward from the pair of longitudinal chassis members, respectively, such that a central space is defined between the pair of struts. The EAS unit may in that case be suspended upright in the central space.

The space saving packaging solution of the present invention, in which the EAS unit is suspended in the center of the "cabin backpack" does not sacrifice precious design space for placement of big sized hydrogen vessels at the lateral sides of a truck.

Another advantageous effect of placing the EAS unit in the middle of the cabin backpack, i.e. in between and above the longitudinal chassis members, is that the EAS unit is submitted to lower resonance vibration input, e.g. relating to the wheelbase and trackwidth filtering mechanism, in comparison to a mounting arrangement at a chassis side. Thus durability prospects are further improved.

The at least one flex plate can e.g. be formed by a sheet metal part that is provided with a cutout pattern, wherein the cutout pattern causes the at least one flex plate to have a geometric form with interconnecting beams that corresponds to either a triangular A-shape or a quadrangular H-shape.

In some embodiments, the flex plate assembly unilaterally couples the EAS unit to only one strut of the pair of struts, and the at least one flex plate has a quadrangular H-shape has two legs that extend separately between said one strut and the EAS unit, wherein the two legs are interconnected by a cross member. The quadrangular H-shaped flex plate in solo fixation setup provides for a pure non-overdetermined solution. In this case the EAS connector may comprise brackets that are welded on the second axial end of the EAS unit, e.g. on a midplane of the EAS unit, and coupled to the quadrangular H-shaped flex plate via spacers.

Alternatively, the flex plate assembly may symmetrically couple the EAS unit to both struts of the pair of struts. In this embodiment, at least one first flex plate connects a first side of the EAS unit to a first strut of the pair of struts, and at least one second flex plate connects an opposing second side of the EAS unit to a second strut of the pair of struts. Preferably, the at least one first flex plate and the at least one second flex plate are triangular, tapering from a larger width at the strut connector towards a narrower width at the EAS connector, e.g. between the connection points with the EAS unit.

In order to cope with axial expansion and contraction of the EAS unit and with manufacturing tolerances of the EAS unit, the at least one flex plate may allow an out-of-plane translation with a range of movement of at least 5 millimeter, preferably at least 10 millimeter. The EAS unit, which preferably has a tubular or cylindrical housing, can have varying dimensions, e.g. in diameter and in axial length. Manufacturing tolerances may account for axial length variations up to 5-10 millimeter. Furthermore, axial expansion and contraction of the EAS unit, e.g. due to temperature increase or decrease between -40° C and +450° C, may be up to 10 millimeter or even more. Hence, the at least one flex plate to strut connector assembly may be arranged for allowing an out-of-plane translation up to 10 or 30 millimeters.

Material stress levels can become too high when the at least one flex plate is relatively thick, although this thickness may be needed to fixate the EAS unit, in the in-plane direction. Stresses in the flex plate material are caused by static bending deformation, superimposed with dynamic in-plane fixation forces. Furthermore, the in-plane stiffness may be reduced when the flex plate is bent, by the deformed shape of flex plate. To address these issues, the flex plate assembly may comprise at least two flex plates extending separately between the strut connector and the EAS connector. For example, the flex plate assembly comprises three, four, five, or six flex plates, or more. The more and thus the thinner the flex plates, the lower the material stress. In this way, the out-of-plane flexibility and in-plane stiffness of the flex plate assembly can be tuned individually and independently provided by multiple flex plates, e.g. to reinforce the assembly in some directions and to reduce the stress per flex plate.

For example, the at least two flex plates may be stacked or spaced apart in the out-of-plane direction. In other words, when the EAS unit is mounted in the suspension arrangement, the at least two flex plates are arranged behind each other in the axial direction of the EAS unit. The at least two flex plates may be stacked directly onto each other, or may be spaced apart from each other in the axial direction, e.g. by spacers between the flex plates. In this embodiment, the at least two flex plates are only connected to each other at the EAS connector and at the strut connector, so that over a distance between the EAS connector and strut connector the flex plates are detached, e.g. free standing, from each other. Hence, during an out-of-plane deflection, the detached sections of the at least two flex plates are free to move or slide with respect to each other. In this latter embodiment, the flex plates sliding over each other may even provide for deliberately designed friction between the co-sliding plates to dampen resonance vibrations in the overall EAS to strut suspension system. During an out-of-plane deflection, the resulting bending stress is inversely proportional to the second moment of area of the flex plate(s). For a rectangular cross section, the second moment of inertia is proportional to the thickness of the flex plate to the third power. By using multiple free standing flex plates instead of a single flex plate, multiple thinner flex plates can be used. For example, in case of two flex plates, the thickness of each individual plate can be reduced by a factor two compared to a given thickness of the single flex plate. In case of three, four or five flex plates, the individual thicknesses can be reduced by a factor three, four, or five. The result is a reduced bending stress in the flex plates overall, thereby providing an increased flexibility in the axial direction without reducing the in-plane stiffness and strength of the assembly.

The at least two flex plates may have equal and uniform thicknesses with respect to each other. In order to provide a certain stiffness and strength in the in-plane direction, the at least two flex plates may need to form a combined total thickness of material in the axial direction. Preferably, the individual thicknesses of each flex plate are equal, so that stresses are equally distributed over the at least two flex plates. For example, a total thickness of 12 millimeters may be formed by a stack of eight flex plates, each flex plate having an individual thickness of 1.5 millimeter.

Preferably the at least two flex plates are identical with respect to each other, in that each flex plate is of the same design, size, shape and material.

Nonetheless, the at least two flex plates can be oriented at an angle about the axial direction with respect to each other. For example, in case of two flex plates, one of the flex plates may be designed and oriented for providing stiffness in a first in-plane direction while being flexible in a second in-plane direction, and the other flex plate may be designed and oriented for providing stiffness in the second in-plane direction while being flexible in the first in-plane direction. The same principle applies in case of more than two flex plates. In order to provide a stiffness that constrains in-plane translations of the second axial end of the EAS unit with respect to the struts, the angle between the first and second in-plane directions may be between 30 and 150 degrees, preferably between 60 and 120 degrees, more preferably between 80 and 100 degrees. The first and second in-plane directions may both be perpendicular to the axial direction of the EAS unit, e.g. at an angle of 60-120 degrees with respect to the axial direction, preferably at an angle between 80-100 degrees.

In some embodiments, the strut connector comprises an adjustment mechanism, arranged for adjusting a distance between the second mount and the first mount in the axial direction of the EAS unit, and provided between the flex plate assembly and the strut for adjustably mounting the flex plate assembly to the strut. In this way, a neutral position of the flex plate assembly can be defined and tuned. The neutral position can e.g. be set so that when a mounted EAS unit is at normal operating temperature, the flex plate assembly is in a first, substantially undeformed position in which the EAS connector is at about the same level as the strut connector as seen in the axial direction, while in a maximum or minimum temperature state of the EAS unit, the flex plate assembly is in a second, deformed position in which the EAS connector is above or below the strut connector, due to the thermal expansion or contraction of the EAS unit. The adjustment mechanism can e.g. comprise one or more longitudinal adjustment slots, or slotted holes, in the strut connector and/or the strut, which allow the strut connector to be positioned with respect to the strut before attachment thereto. The strut connector can e.g. be bolted to the strut by bolts extending through the one or more longitudinal adjustment slots. The one or more longitudinal adjustment slots are elongate instead of circular, so that when the bolt connection is loose the slots can move back and forth relative to the bolts, to increase or decrease the distance between the first and second mount. Primarily the longitudinal adjustment slots may be needed to compensate for static EAS unit production tolerances and in-vehicle assembly tolerances, more specifically, to be able to adjust the EAS fixation system for different mount to mount length variations relative to the struts.

Alternatively, or additionally, the adjustment mechanism may comprise a movable stage that is movable in the axial direction of the EAS unit, e.g. by means of a lead screw, e.g. second bolts placed in axial direction, or electromechanical actuator.

Preferably, the first mount comprises a central base plate that is arranged for supporting the EAS unit in a vertical direction, wherein the EAS unit is secured to the central base plate by a three-point strap fixation that is arranged for constraining in-plane translations of the EAS unit in plane of the central base plate as well as constraining an in-plane rotation of the EAS about its axial centerline, wherein the three-point strap fixation comprises a strap member that extends around the first axial end of the EAS unit, and that is coupled to the central base by one rigid reference fixation and two flexible fixations, wherein the flexible fixations each comprise a Z-shaped bracket arranged for allowing limited out-of-plane roll and pitch rotations of the EAS unit, and for providing a vertical and radial compliance for absorbing local thermal expansion of the EAS unit.

As a result, a non-overconstrained mounting arrangement is provided at the first axial end of the EAS unit, preferably the bottom axial end, with the central base plate in combination with the three-point fixation allow breathing of the EAS unit in vertical and radial direction, thereby effectively lowering material stress levels in the EAS housing.

Preferably, the Z-shaped brackets are each formed by a folded plate, wherein folded edges of the plate are provided with cutouts for reducing a bending stiffness of the folded edges. In this way, the flexibility or compliance of the Z-shaped brackets in the radial and vertical direction can be further improved without reducing stiffness of the suspension in other directions.

To avoid high contact stresses in the EAS unit, the first axial end of the EAS unit may include three contactors, e.g. welded, bolted, press formed, or glued to the first axial end, that are mutually spaced apart by about 120 degrees along a circumference of the EAS unit, wherein the contactors provide a three-point contact between the first axial end and the central base plate and preferably allow for sliding over a substantially flat base plate which is positioned perpendicular to the axial centerline of the upstanding tubular EAS unit. The sliding function per contactor may be relevant for coping with radial (thermal) expansion of the bottom housing of the EAS housing as well as being forgiving against (diameter) misalignments of EAS unit with respect to the position of the rigid reference fixation when being mounted into the vehicle.

In preferred embodiments, the pair of struts are interconnected at or near the pair of longitudinal chassis members by a corrugated plate with a plurality of vertical corrugations, and wherein the first mount is floatingly suspended to the corrugated plate by a set of L-brackets. The corrugated plate thus provides lateral reinforcement and local stability to the pair of longitudinal chassis members at or near the struts, while also providing a stable support base for the EAS suspension arrangement.

Optionally, the first mount and the second mount can be tilted with respect to a top side of the chassis for thereby suspending the EAS unit at a forward inclination in the driving direction of the truck, e.g. to provide extra clearance in the inclined trailer perimeter confined packaging space behind the cabin of the truck for accommodating collision free yaw and pitch rotation of a trailer that is coupled to a fifth wheel of the truck.

Preferably, the elongate EAS unit comprises a tubular housing, e.g. a cylindrical housing, that encloses one or more of: a first selective catalytic reductor, a second selective catalytic reductor, an exhaust fluid mixer, and an oxidation catalyst. For implementations with a H₂-ICE powered truck, a particle filter may be omitted in the EAS unit or may be integrated as a substantially more compact unit into one of the selective catalytic reductors. As a result the overall axial length, or better: height, of the upstanding EAS unit is reduced and thus reduced risk is present on protrusion beyond the inclined trailer perimeter that limits the packaging space in the middle of the "cabin backpack". In this context it is noted that the higher a position needs to be occupied for installation of the various EAS subcomponents above the chassis members, the less packaging space in length direction of the truck is available for this purpose.

The truck may further comprise an exhaust pipe that extends from a top of the EAS unit, for discharging exhaust gas that has passed through the EAS unit. The exhaust pipe at its upper section optionally bifurcates to two or more outlets, e.g. to direct the exhaust gas towards the top and/or lateral sides of the truck. Preferably, a central section of the exhaust pipe is mounted, by a pipe bracket, to a reinforcement cross member that interconnects the pair of struts, e.g. in the form of pressed and folded sheet metal with truss work structure. A lower section of the exhaust pipe comprises a flexible hose that extends between the EAS unit and the pipe bracket. The flexible hose is preferably able to expand and contract in the vertical direction for compensating thermally induced expansion and contraction of the EAS unit. Accordingly, stress buildup in the exhaust pipe and the EAS unit is reduced. For stability, the upper section of the exhaust pipe can e.g. be fixated to a sheet metal cross beam that extends between the pair of struts.

### BRIEF DESCRIPTION OF THE DRAWINGS

The invention will be further elucidated in the figures:
FIG. 1 illustrates an embodiment of a truck comprising a frame that suspends an EAS unit between elongated pressure vessels directly behind the cabin;
FIG. 2 provides a detailed view of an embodiment of the frame;
FIG. 3 provides a top view of an embodiment of the frame, comprising a symmetrical EAS suspension arrangement at a second axial end of the upstanding EAS unit;
FIGs. 4A and 4B respectively provide an isometric view and an exploded view of the symmetrical EAS suspension arrangement at a second axial end of the upstanding EAS unit;
FIG. 5 provides a top view of an alternative or further embodiment of the frame, comprising a H-shaped flex plate assembly at the second axial end of the upstanding EAS unit;
FIGs. 6A and 6B respectively provide an isometric view and an exploded view of the applied H-shaped flex plate assembly;
FIG. 7 illustrates, in an exploded view, an embodiment of the first mount between the EAS unit and the frame;
FIGs. 8A and 8B provide further detailed views of this embodiment of the first mount;
FIG. 9 illustrates an embodiment in which the truck further comprises an exhaust pipe with a flexible hose;
FIGs. 10A-C provide views on details of the fixation system of the embodiment of FIG. 9.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system needs to be constructed or operated in a particular orientation unless stated otherwise.

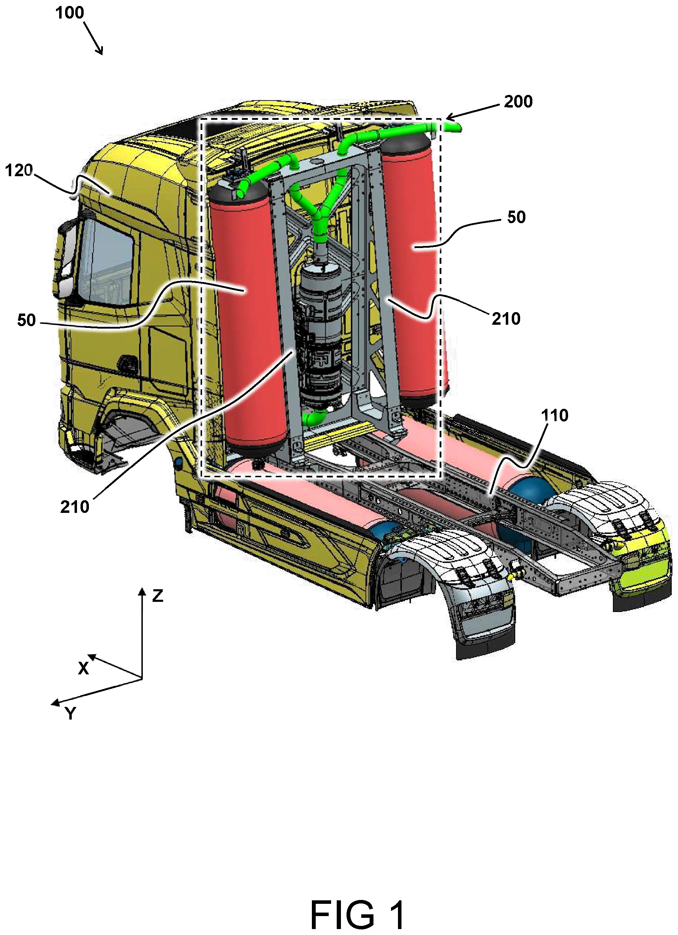

FIG 1 illustrates a truck 100, preferably a vehicle powered by a Hydrogen Internal Combustion Engine (H₂-ICE). Truck 100 may also refer to typical tractor semi-trailer combinations with a fifth wheel (not shown) connecting the semi-trailer with its cargo box system to the tractor. Alternatively, truck 100 may refer to the tractor unit only, without any type of cargo box or trailer attached. Mounted to a chassis 110 of the truck 100 is a frame 200 comprising one or more pressurized fuel tanks 50 for storing pressurized fuel, such as hydrogen. Preferably, the pressurized fuel tanks 50 are elongated pressure vessels that are mounted in upstanding, but slightly forward inclined position in the back and at the outer side corners of the cabin for the purpose of optimal clearance reserve with the perimeter of the front section geometry of a trailer in case of a tractor semi-trailer applications. Such elongated pressure vessels may have a cylindrical body section between opposing spherical axial ends.

The frame 200 extends from the chassis 110 behind the cabin 120, e.g. directly behind the cabin 120, or into the space between the cabin 120 and the trailer or cargo box of the truck, and is arranged for suspending one or more elongated pressure vessels 50 on a rear side of the cabin 120 e.g. in a so called "cabin backpack" configuration. An example of a vessel mount structure for such a "cabin backpack" configuration is disclosed in EP4484199**.** The one or more elongated pressure vessels 50 are oriented in a substantially vertical direction Z, e.g. an upright orientation, normal to the road surface and may be positioned at the outer side corners of the rear wall of the cabin 120.

As illustrated in FIG. 1, the frame 200 comprises a pair of struts 210 that are rigidly connected to the chassis 110. In particular, the chassis includes a pair of longitudinal chassis members that extend between a front axle and a rear axle of the truck. Each strut 210 is coupled to one of the longitudinal chassis members and extends upward, e.g. in the vertical Z direction. The struts 210 may be interconnected, e.g. by a series of laterally straight and/or diagonal cross beams, as shown in FIG. 1. On each lateral side of the truck, the frame 200 provides for a fixation means to suspend the respective upstanding pressure vessels 50, either via a so-called neck mounting or strap mounting solution.

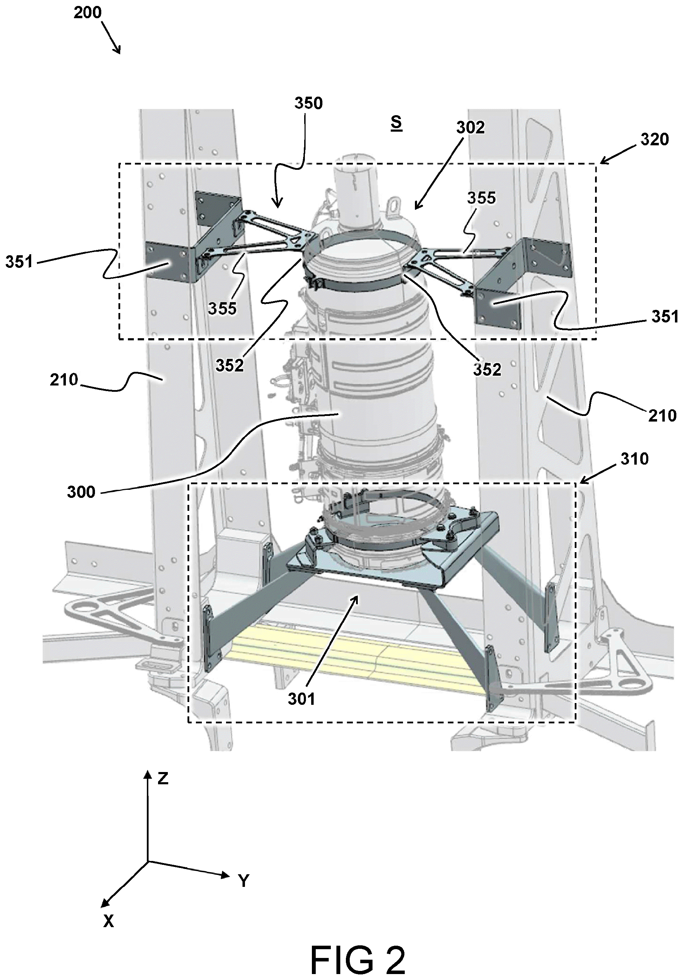

FIG. 2 provides a detailed view of an embodiment of the frame 200. An elongate exhaust aftertreatment system (EAS) unit 300 of the truck is suspended upright in the central space S between the pair of struts 210. The elongate EAS unit e.g. comprises a tubular or cylindrical housing that encloses a first selective catalytic reductor (SCR), a second selective catalytic reductor (SCR), an exhaust fluid mixer, an oxidation catalyst, and/or other components for treating exhaust gas.

A first axial end 301 of the EAS unit, e.g. the bottom end, is connected to the struts 210 by a first mount 310, that is arranged for constraining translations and allowing tilting rotations of the first axial end 301 with respect to the struts 210.

On the opposite site, e.g. at the top, the second axial end 302 of the EAS unit is mounted to the struts 210 by a second mount 320 that is formed by a flex plate assembly 350. The flex plate assembly 350 comprises strut connectors 351 that are connected to the struts 210, and EAS connectors 352 that are connected to the second axial end 302 of the EAS unit. The EAS connectors 352 are each movably coupled to the respective strut connector 351 by at least one flex plate 355.

The flex plates 355 have a flexibility in an out-of-plane direction, e.g. in the axial direction Z of the EAS unit, for allowing an out-of-plane translation and tilting of the EAS connector 352 with respect to the strut connector 351. Preferably, to compensate for expansion and contraction of the EAS unit along its axial centerline, the at least one flex plate 355 allows an out-of-plane translation with a range of movement of at least 5 millimeter, preferably at least 10 millimeter.

The or each flex plate 355 has a rigidity in at least two in-plane directions, e.g. in the forward direction X and lateral direction Y, for constraining in-plane translations of the EAS connector 352 with respect to the strut connector 351. Furthermore, also an in-plane rotation of the EAS connector 352 about the axial direction of the EAS unit 300 may be constrained by either one flex plate assembly having two inter-distanced connection points at the EAS connector or a combination of two (opposing) flex plate assemblies each having only one connection point at the EAS connector or any combination thereof. Depending on the torsional stability, or rigidity, of the upstanding tubular EAS unit and the application of a yaw restraint function in the first axial end mount of the EAS unit one may also consider to apply only one flex plate assembly at the second axial end having only one connection to the EAS connector that is not able to resist to yaw rotations of the EAS unit relative to chassis structure. Alternatively, the rigidity or stiffness in the at least two in-plane directions may also be provided by separate flex plates. For example, a first flex plate may provide a stiffness in a first in-plane direction, e.g. in the X direction, and a second flex plate of the at least two flex plates may provide a stiffness in a second in-plane direction, e.g. in the Y direction.

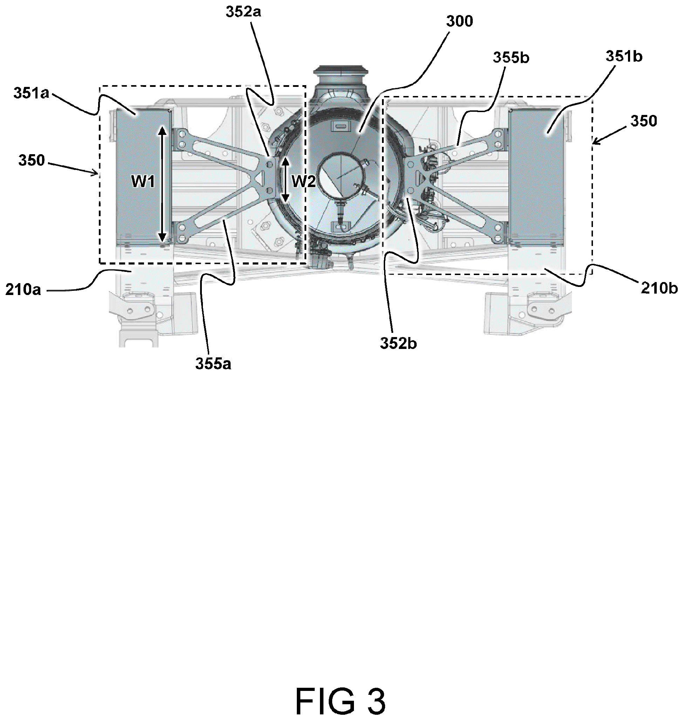

As illustrated in more detail in FIG. 3, a top view of an embodiment of the EAS suspension arrangement is shown wherein the second mount 320 (as indicated in FIG. 2) is composed by two opposing flex plate assemblies 350 that symmetrically couple the EAS unit 300 to both struts 210a, 210b. A set of first flex plates 355a connects a first side of the EAS unit to a first strut 210a, and a set of second flex plates 355b connects an opposing second side of the EAS unit to a second strut 210b. As shown in FIG. 3, the flex plates 355a, 355b may be triangular, tapering from a larger width W1 at the strut connector 351a, 351b towards a narrower width W2 at the EAS connector 352a, 352b. Note that in the illustration of FIG. 3 the EAS connectors 352a and 352b are construed with two fixation bolts, or connection points, which correspond to a design with an explicit, but narrow width W2 at the EAS connector 351a, 352b. Principally such a realization of a triangular tapered flex plate is feasible of constraining the yaw rotation of the upstanding EAS unit by only one flex plate at one side of the EAS unit. Nonetheless, a combination of two opposing flex plates at both sides of the EAS unit will result in a more robust fixation system of the upper end of the EAS unit. Alternatively, one may consider to apply only one fixation bolt (or connection point) in the EAS connectors 352a and 352b which corresponds to a design wherein the narrow width W2 of the flex plate is reduced down to zero. Consequently such a flex plate design is not able to constrain in-plane yaw rotations of EAS unit on its own. The combination with a second, e.g. mirrored, opposing flex plate would however still result in a robust, but simplified design that is able to firmly resist to yaw rotations of the EAS unit.

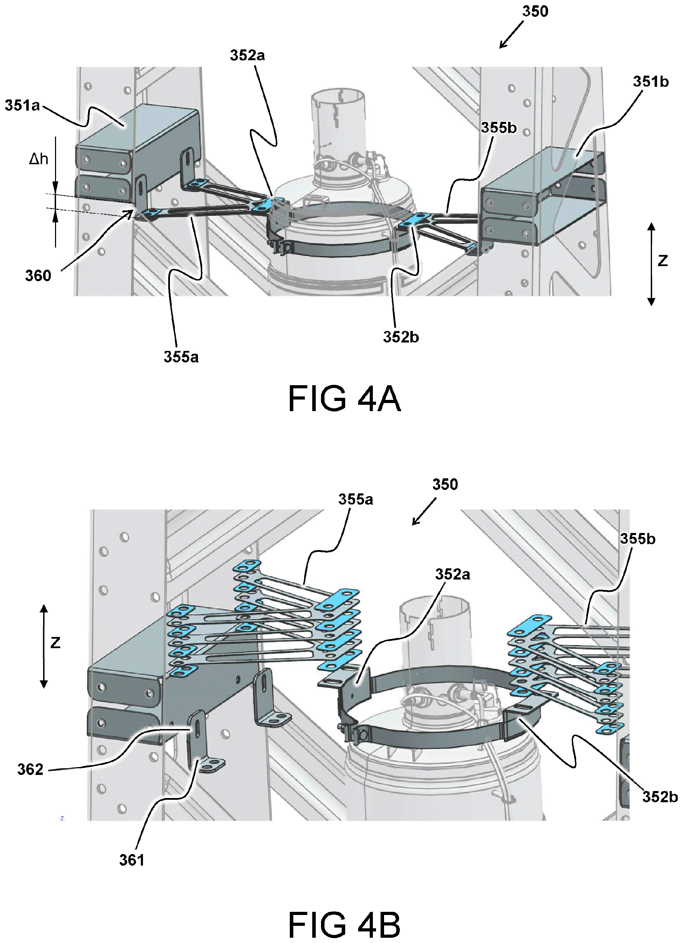

FIGs. 4A-B respectively provide an isometric and exploded view of another or further embodiment of the EAS suspension arrangement. Here, the flex plate assembly 350 comprises multi-layer flex plate arrangements that include a plurality of flex plates 355a, 355b that extend separately between the strut connector 351 and the EAS connector 352. The flex plates 355 are stacked or spaced apart in the out-of-plane direction, e.g. the axial direction Z of the EAS unit. While each of these flex plates 355 are attached to the strut connector 351 on a first end, and attached to the EAS connector 352 on an opposing second end, the midsections of the flex plates 355 between the first and second ends are free floating. That is, the midsections of adjacent flex plates are not connected to each other, so that they are free to move with respect to each other, e.g. during an out-of-plane bending movement of the flex plates 355. Accordingly, the strength of the flex plate arrangement is increased while the bending stiffness remains relatively low. The midsections of the flex plates may be in sliding contact with each other, so that friction occurs during the out-of-plane bending movement, for damping vibrations.

To evenly distribute stresses in the flex plates 355, e.g. bending stresses that occur during movement, or static suspension stresses associated with the suspended pre-load acting on the EAS unit, e.g. corresponding to a bending preset that is introduced into the flex plates during initial installation on the vehicle, the flex plates 355 preferably have equal and uniform thicknesses, or more preferably, are identical with respect to each other in size, shape, and material properties.

Regardless of the flex plate configuration, the strut connector 351 preferably comprises an adjustment mechanism 360 for adjustably mounting the flex plate assembly 350 to the strut 210. The adjustment mechanism 360 is arranged for adjusting the distance, in the axial direction Z of the EAS unit, between the second mount 320 and the first mount 310. As illustrated in FIGs. 4A-B, the adjustment mechanism may comprise one or more L-brackets 361 that are provided with slotted holes 362 that extend in the axial direction Z. The flex plate arrangement 350 can thus be mounted to the strut 210 by means of a bolt connection through the slotted holes 362. The slotted holes 362 allow positioning of the brackets 361 with respect to the strut 210 when the bolt connection is loose.

As illustrated in FIG. 4A the upstanding leg (in Z-direction) of the L-bracket 361 is designed with a substantial height such that the foot of the L-bracket extends with a distance Δh below the cross beam or strut connector 351 in the upstanding chassis strut 210. To avoid doubts it is noted that this distance Δh may also refer to a design wherein the foot of the L-bracket extends above the cross member or strut connector 351. This vertical distance Δh may be tuned to a level to provide for bending of the L-bracket 361 in Y-direction. This is an additional feature to influence the in-plane stiffness of the flex plate 355 in Y-direction which may become relevant to provide an increased freedom to breath in vertical direction at the upper end of the upstanding EAS unit, relating to thermal expansions. Thermal expansion in axial direction of the EAS unit invokes upward bending of the flex plates with a corresponding increase of the distance between the flex plate attachment points between the strut connector 351 and EAS connector 352. Alternatively, thermal expansion of the EAS unit in radial direction (diameter changes of the upper end of the EAS unit) decreases the distance between the flex plate attachment points between the strut connector 351 and EAS connector 352. It may be clear for the skilled engineer that this tuning feature Δh is specifically relevant for EAS suspension arrangements wherein two opposing flex plates are being applied and wherein the in-plane stiffness in Y-direction of the flex plate itself is too stiff to compensate for these thermal expansions of the EAS unit. It is obvious that the tuning feature Δh also works in a design without an adjustment mechanism 360. To avoid doubts it is stated that the tuning feature Δh refers to an application of the L-bracket 361 with or without slotted holes.

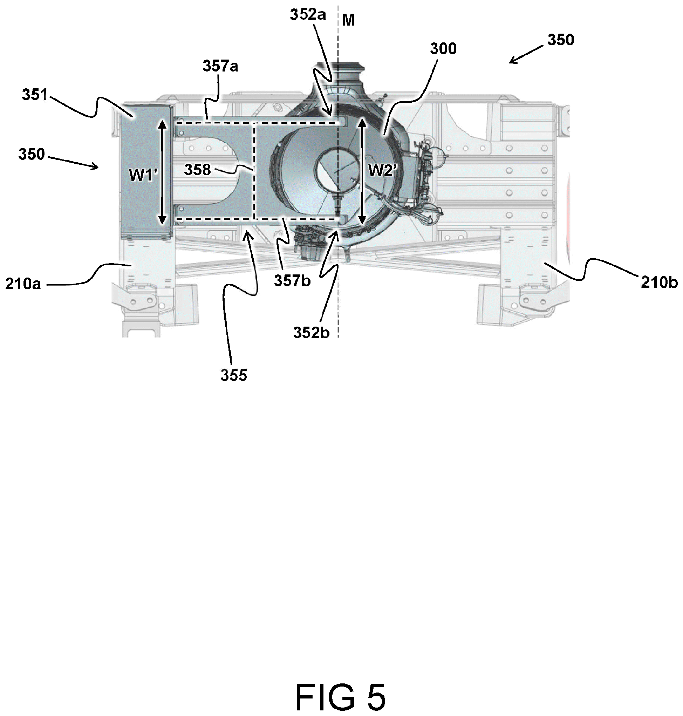

FIG. 5 illustrates another or further embodiment of the EAS suspension arrangement, in a top view. In this embodiment, the flex plate 355 has a quadrangular H-shape with two legs 357a, 357b that extend separately between the strut 210a and the EAS unit 300, e.g. in parallel to each other. The width W1' of the flex plate 355 at the strut connector 351a is about the same as the width W2' of the flex plate 355 at the EAS connectors 352a, 352b. The EAS connectors 352a and 352b are thus coupled to the EAS unit over a relatively large width, e.g. over the midplane M of the EAS unit 300 that intersects the axial centerline of the EAS unit contributing to a high resistance to yaw rotations of the upstanding EAS unit. The two legs 357a, 357b are interconnected by a cross member 358 for stability and strength which can be important to provide for sufficient in-plane stiffness in forward direction X of the flex plate 355 and to be able to withstand inertia forces acting on the heavy EAS unit, e.g. during braking or acceleration of the truck, and thus keeping the EAS unit stably positioned in upstanding position, constraining pitch motion. As illustrated, this allows the quadrangular H-shaped flex plate assembly 350 to unilaterally couple the EAS unit 300 to only one strut 210a of the pair of struts 210a, 210b, instead of the symmetrical approach as shown in FIG. 3. Moreover the unilateral coupling of the second end of the EAS unit to only one strut 210 advantageously avoids potential thermal expansion related over-constraint problems as being explained in the discussion of FIGs. 4A and 4B of the embodiment with two opposing flex plates. Due to the favorable H-shape geometry of the quadrangular flex plate with a crossbeam 358 in the middle no stiffness issues are to be expected to absorb (small) radial expansions of the EAS unit in X direction. These thermal radial expansions of the EAS unit give rise to increase of the distance W2' between the two opposing EAS connectors 352a and 352b which can fairly easily be absorbed by the extensions of the two legs 357a, 357b and thus comply to this specific longitudinal elongation without significant resistance or building up of material stress.

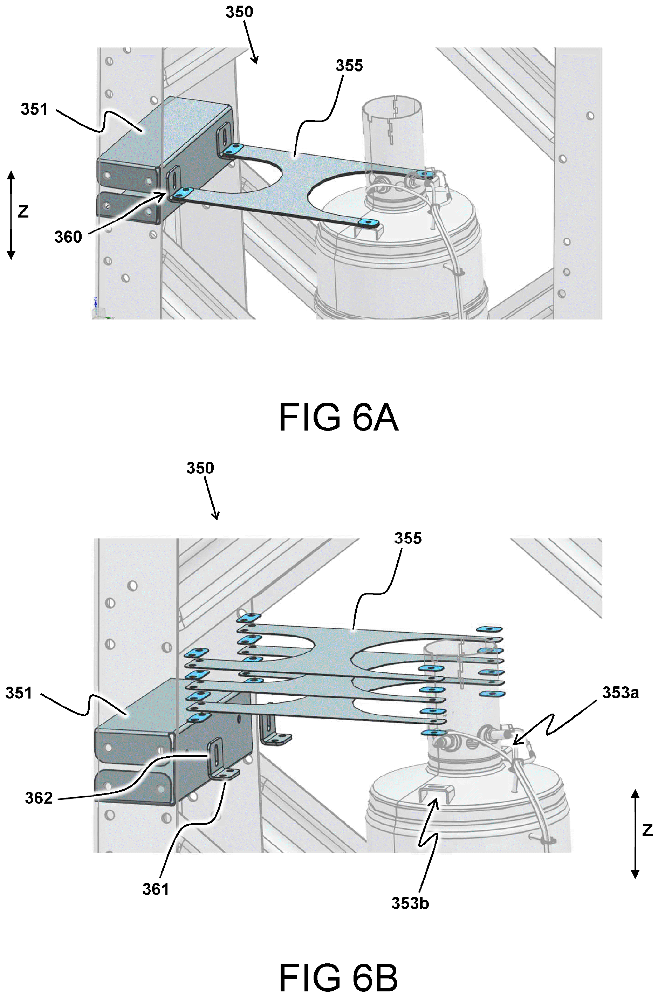

FIGs. 6A and 6B provide an isometric view and an exploded view, respectively, of the H-shaped flex plate assembly 350 described above. As shown in FIG. 6B, also here, a multilayer flex plate arrangement is possible as described earlier with reference to FIG. 4B.

Note that it may be favorable to install welded brackets 353a, 353b on top of the EAS unit in this case of application of a quadrangular H-shaped flex plate instead of implementing a circumferential strap with two opposing saddles to provide for the EAS connectors 352a, 352b as being realized in the embodiments of FIGs. 2, 3, 4A and 4B. Specifically, in the upper axial end of the upstanding cylindrical EAS unit, the available packaging space for implementing additional components in radial X-direction can become too tight as a result of the forwardly tilted trailer perimeter.

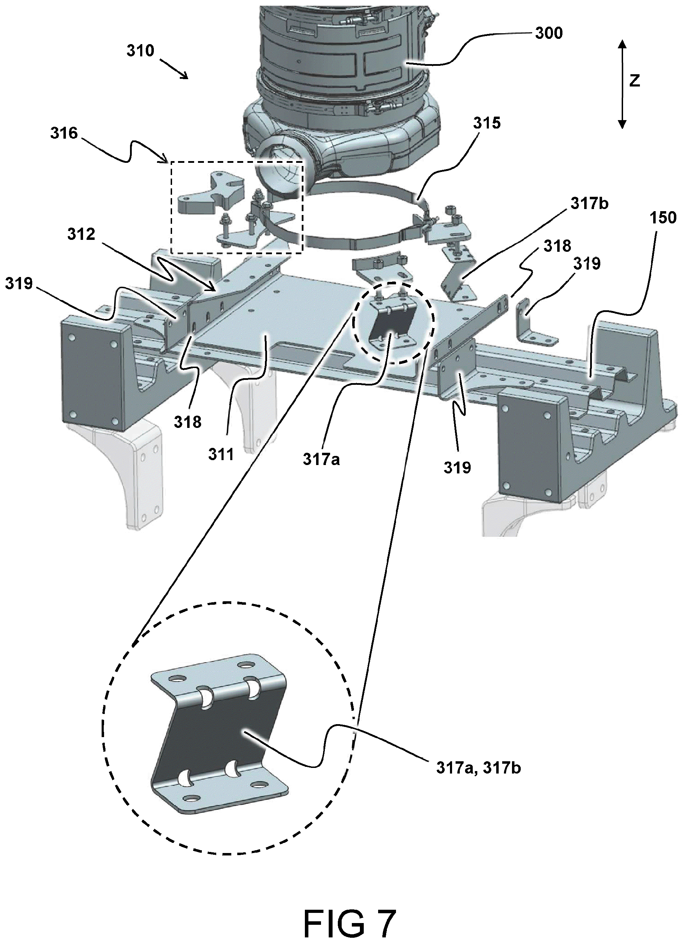

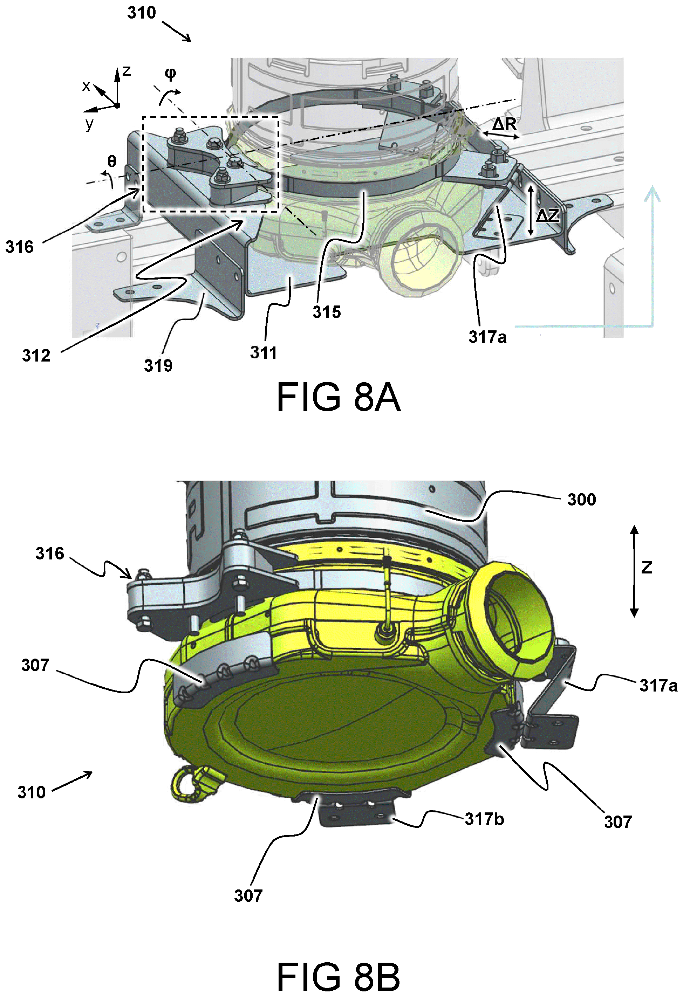

FIGs. 7 illustrates an embodiment of the first mount 310 in more detail. As shown, the first mount 310 comprises a central base plate 311 that supports the EAS unit 300 in the vertical direction Z. The EAS unit 300 is secured to the central base plate 311 by a three-point strap fixation to constrain in-plane translations of the EAS unit 300 in plane of the central base plate 311 as well as constraining an in-plane rotation of the EAS unit 300 about its axial centerline. The three-point strap fixation comprises a strap member 315 that extends around the first axial end of the EAS unit 300, and that is coupled to the central base plate 311 by one rigid reference fixation 316 and two flexible fixations 317a, 317b. The flexible fixations 317a, 317b each comprise a Z-shaped bracket that is arranged for allowing limited out-of-plane roll rotations φ and pitch rotations θ of the EAS unit, e.g. within ± 3-5 degrees, and for providing a vertical compliance ΔZ and radial compliance ΔR for absorbing local thermal expansion of the EAS unit 300 in lower axial end of the EAS housing, see also FIG. 8A. The Z-shaped brackets 317a, 317b are each preferably formed by a folded plate. To adjust or reduce the bending stiffness of the Z-shaped brackets 317a, 317b, the folded edges of the plate can be provided with cutouts 318 as highlighted in FIG. 7.

Optionally, to reduce contact stresses on the EAS unit 300 while providing a statically determined suspension, the first axial end of the EAS unit may include three contactors 307 that are mutually spaced apart by about 120 degrees along a circumference of the EAS unit, as shown in FIG. 8B. The contactors 307 thus provide a three-point contact between the first axial end and the central base plate 311. The contactors 307 may either be welded, bolted, press formed, glued, etc., to the bottom of the EAS housing. Together with the rigid reference fixation 316 which is placed on a double folded lip 312 of the sheet metal base plate 311, the static weight of the heavy EAS unit is being carried by these contactors 307. In this context the rigid reference fixation 316 positions the upstanding EAS unit on the base plate 311, in the in-plane direction. Furthermore, this design of the bottom end mounting system with contactors tightly fixates the EAS unit in vertical Z-direction to firmly withstand acceleration forces as typically occur during operation of the vehicle on an uneven road. Pretension, e.g. introduced during mounting and fastening, in the two Z-shaped flexible fixations 317a, 317b help pushing the EAS unit against the flat base plate 311 via the contactors 307. The geometric shaping of the folded lip 312 of the sheet metal base plate 311 with a U-shaped cross section provides for small pitch, indicated with θ in FIG 8A, and roll, indicated with φ in FIG 8A, compliance rotations of the rigid reference fixation 316 as needed to avoid an over-constrained fixation of the bottom axial end structure of the EAS unit.

As shown in FIG. 7, at or near the pair of longitudinal chassis members, the pair of struts 210 are preferably interconnected by a cross member 150 that locally reinforces a lateral and skating stiffness of the longitudinal chassis members below the struts 210. The cross member 150 may advantageously be provided by a corrugated plate with a plurality of vertical corrugations, to also provide stiffness in the vertical direction Z, as a stable support for the EAS unit 300. To compensate for in-vehicle installation assembly tolerances of mounting the big sized EAS unit into the backpack frame, the first mount 310 is preferably floatingly suspended to the corrugated plate, e.g. by a set of L-brackets 319, to align the first mount 310 and the cross member 150 such that a well-defined reference plane is provided for the three contactors 307 underneath the bottom of the EAS housing. For this purpose of aligning and adjusting, vertically oriented slotted holes 318 (see FIG 7) are being provided into the upstanding folded lips of the central base plate. When the connecting bolts are loose the base plate can be adjusted against the three contactors. Furthermore, the contactors 307 can play an important role to allow for sliding over the substantially flat plate which is positioned perpendicular to the axial axis of the upstanding tubular EAS unit. The sliding function per contactor may be relevant for coping with radial (thermal) expansion of the bottom housing of the EAS housing as well as being forgiving against misalignments of EAS unit with respect to the position of the rigid reference fixation 316 when being mounted into the vehicle. Optionally, one may even consider to add specific (deformation) geometry into the upstanding walls of the L-brackets 319 that carry the base plate such that a further, but limited compliance is being added to the floating table 311 for the purpose of enhanced vibration isolation of the EAS unit and/or further optimization of the freedom to rotate by the first mount when needed to minimize internal structure forces, e.g. relating to non-linear over-constrained behavior of the in the overall suspension construction setup of the EAS unit. In such a special design the L-brackets 319 act as a (firm) cushion for the carrying base plate 311.

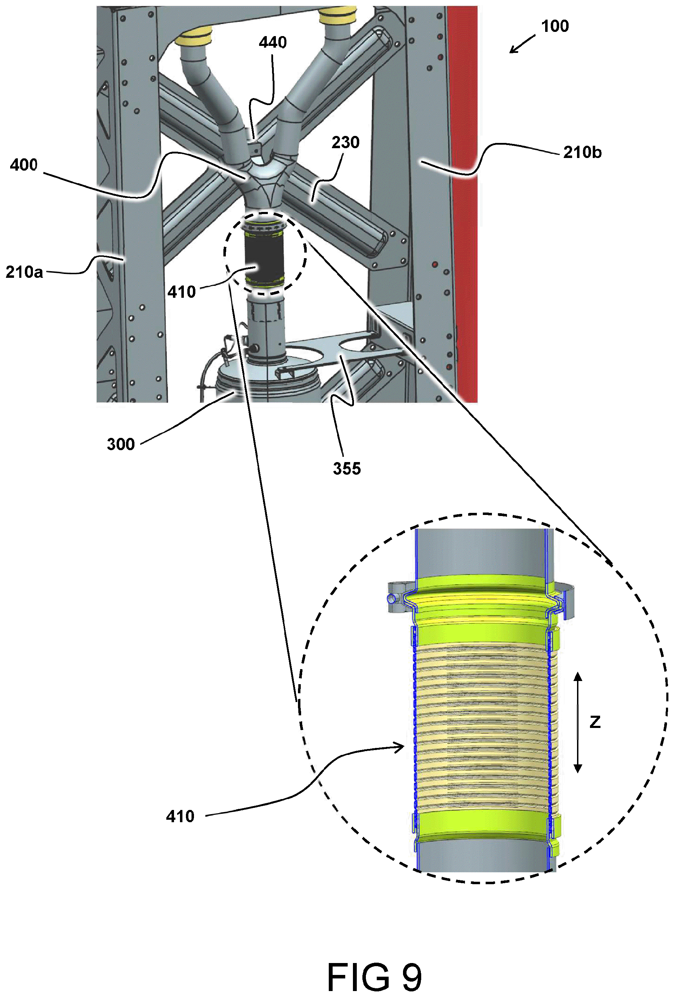

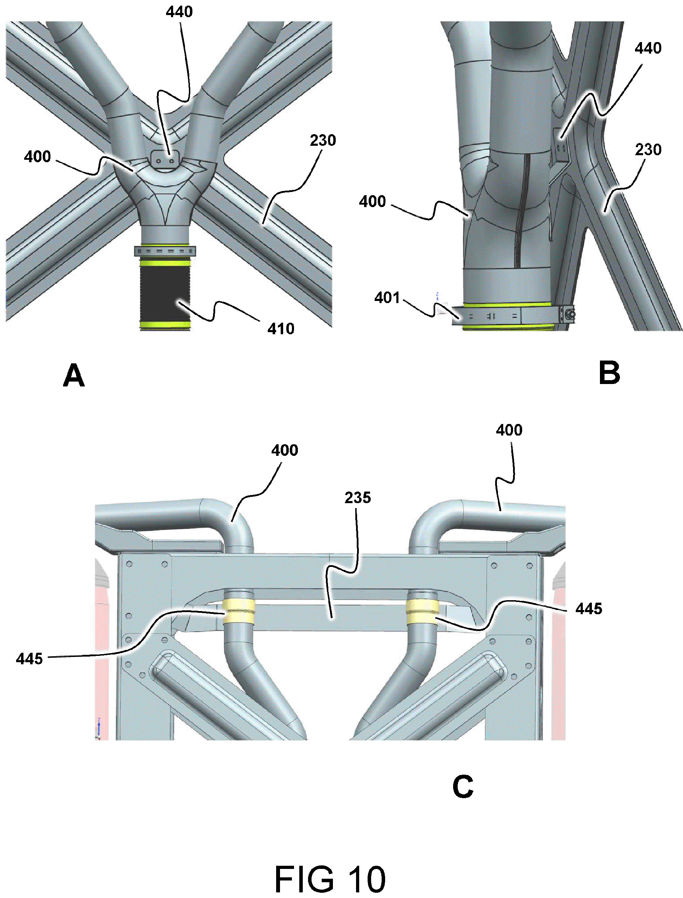

FIG. 9 illustrates an embodiment wherein the truck 100 further comprises an exhaust pipe 400 that extends from a top of the EAS unit 300. A central section of the exhaust pipe 400 is mounted, by a pipe bracket 440, to a reinforcement cross member 230, e.g. in the form of pressed and folded sheet metal with truss work structure, that interconnects the pair of struts 210a, 210b. A lower section of the exhaust pipe 400 comprises a flexible hose 410 that extends between the EAS unit 300 and the pipe bracket 440. The flexible hose 410 is able to expand and contract in the vertical direction Z for compensating thermally induced expansion and contraction of the EAS unit 300. The flexible hose 410 e.g. comprises a bellow with corrugated wall structure or comprises a section with shiftable rings, e.g. stacked in axial length direction, that hook into each other such that the flexible part of the pipe is extendible in the vertical direction Z. As illustrated in FIG. 10A-C, the exhaust pipe 400 bifurcates at the central section, to two parallel exhaust pipe outlets at the top and further upwards bends off to the sides of the vehicle. The flexible hose 410 is mounted to the inlet of upper section of the exhaust pipe, e.g. via circular straps 401 which may be integrated with the central pipe bracket 440b. The upper section of the exhaust pipe 400 can be fixated, e.g. by means of further brackets 445, to a sheet metal cross beam 235 that extends between the pair of struts 210a, 210b, and which also reinforce the pair of struts 210a, 210b at the top.

It will be clear to the skilled person that the invention is not limited to any specific embodiment herein described and that combinations or modifications are possible, in as far as these can be considered within the scope of the appended claims. Also kinematic inversions are considered inherent to the invention disclosed herein. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck (100), comprising a chassis (110) that includes a pair of longitudinal chassis members that extend between a front axle and a rear axle of the truck, and a frame (200) that comprises at least one strut (210) that extends upward from the chassis behind a cabin (120) of the truck, wherein an elongate exhaust aftertreatment system, EAS, unit (300) of the truck is suspended in an upright position to the at least one strut (210);
wherein a first axial end (301) of the EAS unit is connected to the at least one strut (210) by a first mount (310), wherein the first mount (310) is arranged for constraining translations and at least allowing one or more tilting rotations of the first axial end (301) of the EAS unit with respect to the at least one strut (210);
**characterized in that** a second axial end (302) of the EAS unit is mounted to the at least one strut (210) by a second mount (320) that is formed by a flex plate assembly (350), wherein the flex plate assembly (350) comprises a strut connector (351) that is connected to the at least one strut (210) and an EAS connector (352) that is connected to the second axial end (302) of the EAS unit, wherein the EAS connector (352) is movably coupled in axial direction (Z) of the EAS unit to the strut connector (351) by at least one flex plate (355);
wherein the at least one flex plate (355) has a flexibility in an out-of-plane direction (Z) for allowing an out-of-plane translation and tilting of the EAS connector (352) with respect to the strut connector (351), and a rigidity in at least two in-plane directions (X, Y) for constraining in-plane translations of the EAS connector (352) with respect to the strut connector (351).

2. The truck (100) according to claim 1, wherein the frame (200) is arranged for suspending one or more elongate pressure vessels (50) in a substantially upright orientation behind the cabin (120) of the truck, wherein the at least one strut (210) is part of a pair of struts (210a, 210b) that extend upward from the pair of longitudinal chassis members, respectively, such that a central space (S) is defined between the pair of struts (210a, 210b), wherein the EAS unit (300) is suspended upright in the central space (S).

3. The truck (100) according to claim 1 or 2, wherein the flex plate assembly (350) unilaterally couples the EAS unit (300) to the at least one strut (210), wherein:
- the at least one flex pate (355) is coupled to a pair of connection points of the EAS connector (352) that are spaced apart by a distance for constraining a rotation of the EAS unit (300) about its axial centerline, wherein preferably the at least one flex plate (355) has a quadrangular H-shape having two legs (357a, 357b) that extend separately between respective strut connectors (351a, 351b) and EAS connectors (352a, 352b), wherein the two legs (357a, 357b) are interconnected by a web; or
- the at least one flex plate (355) is coupled to a single connection point of the EAS connector (352), and wherein the first mount (310) is arranged for constraining the rotation of the EAS unit (300) about its axial centerline.

4. The truck (100) according to claim 1 or 2, wherein the flex plate assembly (350) symmetrically couples the EAS unit (300) to a pair of struts (210a, 210b), wherein at least one first flex plate (355a) connects a first side of the EAS unit to a first strut (210a) of the pair of struts, and wherein at least one second flex plate (355b) connects an opposing second side of the EAS unit to a second strut (210b) of the pair of struts, wherein preferably the at least one first flex plate (355a) and the at least one second flex plate (355b) are triangular, tapering from a larger width (W1) at the strut connector (351a, 351b) towards a narrower width at the EAS connector (352a, 352b).

5. The truck (100) according to any preceding claim, wherein the flex plate assembly (350) comprises one or more L-brackets (361), wherein a leg of the L-bracket is mounted to the strut connector (351), and wherein a foot of the L-shaped bracket is mounted to the at least one flex plate (355), wherein the foot extends at a vertical distance (Δh) below or above the strut connector (351), wherein the vertical distance (Δh) is tunable to control a bending of the flex plate assembly (350).

6. The truck (100) according to any preceding claim, wherein the at least one flex plate (355) is formed by a sheet metal part that is provided with a cutout pattern, wherein the cutout pattern causes the at least one flex plate (355) to have a geometric form with interconnecting beams that corresponds to either a triangular A-shape or a quadrangular H-shape.

7. The truck (100) according to any preceding claim, wherein the at least one flex plate (355) allows an out-of-plane translation with a range of movement of at least 5 millimeter, preferably at least 10 millimeter.

8. The truck (100) according to any preceding claim, wherein the flex plate assembly (350) comprises a multi-layer flex plate arrangement that includes at least two flex plates (355) extending separately between the strut connector (351) and the EAS connector (352), wherein the at least two flex plates (355) are stacked or spaced apart in the out-of-plane direction (Z).

9. The truck (100) according to any preceding claim, wherein the strut connector (351) comprises an adjustment mechanism (360) for adjustably mounting the flex plate assembly (350) to the struts, wherein the adjustment mechanism (360) is arranged for adjusting a distance between the second mount (320) and the first mount (310) in the axial direction (Z) of the EAS unit, wherein preferably the adjustment mechanism (360) comprises a body (361) provided with one or more slotted holes (362) extending in axial direction (Z) of the EAS unit for mounting to the strut (210) by means of a bolt connection, wherein the one or more slotted holes (362) are arranged for allowing positioning of the body (361) with respect to the strut (210) when the bolt connection is loose.

10. The truck (100) according to any preceding claim, wherein the first mount (310) comprises a central base plate (311) that is arranged for supporting the EAS unit (300) in a vertical direction (Z), wherein the EAS unit (300) is secured to the central base plate (311) by a 3-point strap fixation that is arranged for constraining in-plane translations of the EAS unit (300) in plane of the central base plate (311) as well as constraining an in-plane rotation of the EAS unit (300) about its axial centerline, wherein the 3-point strap fixation comprises a strap member (315) that extends around the first axial end (301) of the EAS unit, and that is coupled to the central base plate (311) by one rigid reference fixation (316) and two flexible fixations (317a, 317b), wherein the flexible fixations (317a, 317b) each comprise a Z-shaped bracket arranged for allowing limited out-of-plane roll and pitch rotations (φ, θ) of the EAS unit, and for providing a vertical and radial compliance (ΔZ, ΔR) for absorbing local thermal expansion of the EAS unit (300), wherein preferably each Z-shaped brackets (317a, 317b) is formed by a folded plate, wherein folded edges of the plate are provided with cutouts (318) for reducing a bending stiffness of the folded edges.

11. The truck (100) according to claim 10, wherein the central base plate (311) comprises a double folded lip (312) and wherein the rigid reference fixation (316) is mounted to the double folded lip (312), wherein the double folded lip (312) is arranged for allowing roll and pitch rotations of the rigid reference fixation (316) with respect to the at least one strut (210).

12. The truck (100) according to any of claims 10-11, wherein the first axial end (301) of the EAS unit includes three contactors (307) that are mutually spaced apart by about 120 degrees along a circumference of the EAS unit (300), wherein the contactors (307) provide a 3-point contact between the first axial end (301) and the central base plate (311).

13. The truck (100) according to any preceding claim, wherein the pair of struts (210a, 210b) are interconnected at or near the pair of longitudinal chassis members by a corrugated plate (150) with a plurality of vertical corrugations, and wherein the first mount (310) is floatingly suspended to the corrugated plate (150) by a set of L-brackets (319), wherein preferably the set of L-brackets (319) comprises one or more slotted holes (318) that are arranged for adjusting a vertical position and orientation of the first mount (310) with respect to the chassis (110).

14. The truck (100) according to any preceding claim, wherein the first mount (310) and the second mount (320) are tilted with respect to a top side of the chassis (110) for thereby suspending the EAS unit (300) at a forward inclination in the driving direction of the truck.

15. The truck (100) according to any preceding claim, further comprising an exhaust pipe (400) that extends from a top of the EAS unit (300), wherein a central section of the exhaust pipe is mounted, by a pipe bracket (440), to a reinforcement cross member (230) that interconnects the pair of struts (210a, 210b), wherein a lower section of the exhaust pipe comprises a flexible hose (410) that extends between the EAS unit (300) and the pipe bracket (440), wherein the flexible hose (410) is able to expand and contract in the vertical direction (Z) for compensating thermally induced expansion and contraction of the EAS unit (300), wherein preferably an upper section of the exhaust pipe (400) is fixated to a sheet metal cross beam (235) that extends between the pair of struts (210a, 210b).
